(19) Europäisches Patentamt
European Patent Office
Office européen des brevets

(11) EP 0 884 345 B1

(12) # EUROPÄISCHE PATENTSCHRIFT

(45) Veröffentlichungstag und Bekanntmachung des Hinweises auf die Patenterteilung:
**14.07.1999 Patentblatt 1999/28**

(51) Int Cl.[6]: **C08G 77/388**, C08G 77/392, C08G 77/46

(21) Anmeldenummer: **98110150.4**

(22) Anmeldetag: **04.06.1998**

(54) **(Meth)acrylatgruppen und Oxyalkylengruppen aufweisende Organosiliciumverbindungen**

Organosilicon compounds containing (meth)acrylate groups and oxyalkylene groups

Composants d'organosilice contenant des groupes méthacrylate et des groupes oxyalkylène

(84) Benannte Vertragsstaaten:
**CH DE FR GB LI NL**

(30) Priorität: **12.06.1997 DE 19724948**

(43) Veröffentlichungstag der Anmeldung:
**16.12.1998 Patentblatt 1998/51**

(73) Patentinhaber: **Wacker-Chemie GmbH**
**81737 München (DE)**

(72) Erfinder:
- **Dauth, Jochen, Dr.**
  **84489 Burghausen (DE)**
- **Schnitzer, Klaus**
  **84387 Julbach (DE)**

(74) Vertreter: **Budczinski, Angelika et al**
**c/o Wacker-Chemie GmbH,**
**Zentralabteilung PML,**
**Hanns-Seidel-Platz 4**
**81737 München (DE)**

(56) Entgegenhaltungen:
**EP-A- 0 230 342**
**EP-A- 0 475 363**
**EP-A- 0 719 836**
**US-A- 5 374 483**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 884 345 B1

## Beschreibung

Die Erfindung betrifft (Meth)acrylatgruppen aufweisende Organosilicium-Oxyalkylen-Copolymere, Verfahren zu deren Herstellung und deren Verwendung.

Hydrophile Siliciumverbindungen und Verwendung dieser Verbindungen für die Herstellung von Kontaktlinsen sind in der DE-A 30 03 300 (American Optical Corp., offengelegt am 07.08.1980) beschrieben. Die schwach hydrophilen Silicone enthalten Hydroxypropylgruppen und keine Polyoxyalkylene, wobei die Veresterung mit dem nicht unbedenklichen Methacrylsäurechlorid erfolgt. In der Auslegeschrift DE 1 270 716 (Dow Corning Corp., ausgelegt am 20. Juni 1968) sind Mittel zur Verbesserung der Haftung von Polymerisaten auf Unterlagen offenbart. Die entsprechenden Verbindungen werden dabei durch Hydrolyse und Kondensation von acrylierten Oxyalkylen- oder Polyoxyalkylensilanen hergestellt. Eine gesonderte Verteilung von Acrylat- und Polyoxyalkylengruppen entlang des Polymerrückgrates ist damit nicht gegeben. Des weiteren sind hydrophile Silicone mit Epoxyfunktionen als reaktive Gruppen in EP-A 470 613 (Union Carbide Chemicals and Plastics Co.; ausgegeben am 12.02.92) beschrieben. Hydrophile Silicone ohne weitere reaktiven Gruppen sind in EP-A 475 363 (Dow Corning Toray Silicone Co.; ausgegeben am 18.03.92) beschrieben. Hier erfolgt die Darstellung durch Umsetzung (meth)acrylierter Polyoxyalkylene mit aminogruppenhaltigen Polysiloxanen im Zuge einer Michael-Addition ähnlichen Reaktion, wobei Restacrylatgruppen am Polysiloxan ausgeschlossen sind. Schließlich werden in EP-A 400 827 (Hoechst Celanese Corp.; ausgegeben am 05.12.90) noch Oxymethylenpolymere mit Polysiloxanseitenketten beschrieben. Höhere Oxyalkylenpolymere sind jedoch in dieser Anmeldung nicht beschrieben.

Unter der Bezeichnung Organopolysiloxane sollen im folgenden dimere, oligomere und polymere Siloxane verstanden werden.

Gegenstand der Erfindung sind (Meth)acrylatgruppen und Oxyalkylengruppen aufweisende Organosiliciumverbindungen enthaltend Einheiten der Formel

$$A_aA`_uR_bSiX_cO_{(4-a-b-c-u)/2} \qquad (I),$$

wobei

R gleich oder verschieden sein kann und einen einwertigen, SiC-gebundenen, gegebenenfalls substituierten Kohlenwasserstoffrest mit 1 bis 22 Kohlenstoffatomen bedeutet,
X gleich oder verschieden ist und einen Rest der Formel $-OR^1$ mit $R^1$ gleich Wasserstoffatom oder ein Alkylrest mit 1 bis 8 Kohlenstoffatomen, der durch Ethersauerstoffatome substituiert sein kann, oder einen Rest der Formel

$$-R^2\{[CH(CH_3)CH_2O]_e\ [CH_2CH_2O]_f\ [(CH_2)_4O]_g\ R^3\}_{y-1} \qquad (II)$$

bedeutet, wobei $R^2$ einen SiC-gebundenen zweiwertigen oder dreiwertigen Kohlenwasserstoffrest mit 2 bis 60 Kohlenstoffatomen bedeutet, der durch ein oder mehrere Sauerstoffatome unterbrochen sein kann und der durch eine oder mehrere Gruppen der Formeln

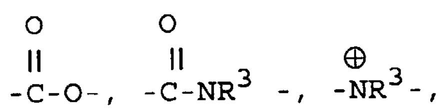

$-NHR^3-$, und -S-, bevorzugt

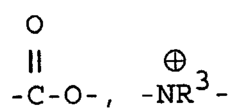

und $-NHR^3-$, substituiert ist, y entsprechend der Wertigkeit von Rest $R^2$ 2 oder 3 ist, $R^3$ ein Wasserstoffatom oder einen gegebenenfalls mit einer Gruppe -C(O)- substituierten Kohlenwasserstoffrest mit 1 bis 20 Kohlenstoffatomen

darstellt sowie e, f und g jeweils unabhängig voneinander 0 oder eine ganze Zahl von 1 bis 200 ist, mit der Maßgabe, daß die Summe $e + f + g \geq 1$ ist,

A ein Rest der Formel

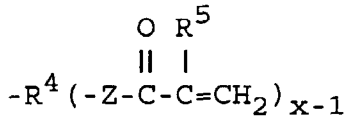

(III)

ist, wobei $R^4$ einen zweiwertigen oder dreiwertigen Kohlenwasserstoffrest mit 2 bis 60 Kohlenstoffatomen bedeutet, der durch ein oder mehrere Sauerstoffatome unterbrochen sein kann, x entsprechend der Wertigkeit von Rest $R^4$ 2 oder 3 ist, Z ein Rest -0- oder $-NR^3-$ ist mit $R^3$ gleich der obengenannten Bedeutung, wobei -O- besonders bevorzugt ist, und $R^5$ ein Wasserstoffatom oder eine Methylgruppe bedeutet, wobei ein Wasserstoffatom bevorzugt ist,

A` ein Rest der Formel

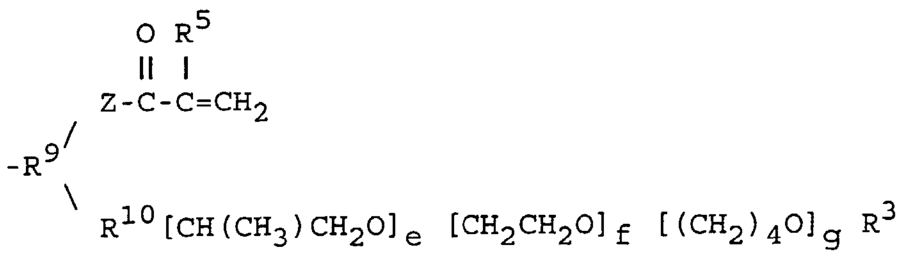

(XI)

ist, wobei $R^9$ einen dreiwertigen Kohlenwasserstoffrest mit 2 bis 60 Kohlenstoffatomen bedeutet, der durch ein oder mehrere Sauerstoffatome unterbrochen sein kann, $R^{10}$ einen zweiwertigen Kohlenwasserstoffrest mit 2 bis 20 Kohlenstoffatomen bedeutet, der durch ein oder mehrere Sauerstoffatome unterbrochen sein kann und der durch eine oder mehrere Gruppen der Formeln

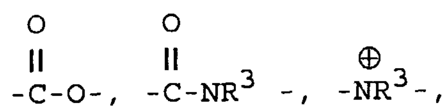

$-NHR^3-$, und -S-, bevorzugt

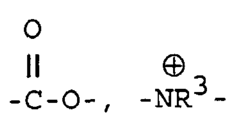

und $-NHR^3-$, substituiert ist, sowie $R^5$, $R^3$, e, f und g eine der oben dafür angegebenen Bedeutungen haben,

a 0, 1 oder 2 ist,
u 0, 1 oder 2 ist
b 0, 1, 2 oder 3 ist und
c 0, 1, 2 oder 3 ist,

mit der Maßgabe, daß die Summe $a+b+c+u \leq 4$ ist und die Organosiliciumverbindung pro Molekül mindestens einen

Rest A und mindestens einen Rest der Formel (II) oder mindestens einen Rest A` aufweist.

Bei den erfindungsgemäßen Organosiliciumverbindungen kann es sich sowohl um Silane handeln, d.h. Verbindungen der Formel (I) mit a+b+c+u=4, als auch um Siloxane, d.h. Verbindungen enthaltend Einheiten der Formel (I) mit a+b+c+u≤3. Vorzugsweise handelt es sich bei den erfindungsgemäßen Organosiliciumverbindungen um Organopolysiloxane, insbesondere um solche, die aus Einheiten der Formel (I) bestehen.

Falls es sich bei den erfindungsgemäßen Organosiliciumverbindungen um Organopolysiloxane handelt, liegt der durchschnittliche Wert für a bevorzugt von 0,001 bis 1,0, besonders bevorzugt von 0,01 bis 0,5, der durchschnittliche Wert für b bevorzugt von 0 bis 3,0, besonders bevorzugt von 0,2 bis 2,5, der durchschnittliche Wert für c bevorzugt von 0,001 bis 3,0, besonders bevorzugt von 0,01 bis 2, und der durchschnittliche Wert für u bevorzugt von 0,001 bis 1, besonders bevorzugt von 0,01 bis 0,5 .

Die erfindungsgemäßen Organosiliciumverbindungen besitzen vorzugsweise ein durchschnittliches Molekulargewicht $M_n$ von 400 bis 1 000 000 g/mol, besonders bevorzugt 5 000 bis 150 000 g/mol, und vorzugsweise eine Viskosität von 10 bis 1 000 000 $mm^2/s$, besonders bevorzugt 20 bis 100 000 $mm^2/s$, jeweils bei 25°C.

Die erfindungsgemäßen Organosiliciumverbindungen können auch wachsartig oder fest sein.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, Allyl-, 3-Butenyl-, 5-Hexenyl-, 1-Propenyl- und 1-Pentenylrest; Alkinylreste, wie der Ethinyl-, Propargyl- und 1-Propinylrest, Arylreste, wie der Phenyl-, Naphthyl-, Antrhryl- und Phenanthrylrest, Alkarylreste, wie o-, m-, p-Tolylreste; Xylylreste und Ethylphenylreste; und Aralkylreste, wie der Benzylrest, der Phenylethylrest und der Phenylnonylrest.

Beispiele für substituierte Kohlenwasserstoffreste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um unsubstituierte Kohlenwasserstoffreste mit 1 bis 12 Kohlenstoffatomen, wobei der Methylrest besonders bevorzugt ist.

Beispiele für Alkylreste $R^1$ sind die für Rest R angegebenen Beispiele für Alkylreste mit bis zu 8 Kohlenstoffatomen sowie der Methoxyethyl- und Ethoxyethylrest.

Bevorzugt ist der Rest $R^1$ ein Wasserstoffatom, eine Methyl-, Ethyl-, Propyl- oder Butylgruppe, insbesondere Methyl- und Ethylgruppe.

Beispiele für Reste $R^2$ sind

$$-(CH_2)_3-O-CO-CH_2-CH_2-NH-(CH_2)_3-$$

$$-(CH_2)_3-NH-CO-CH_2-CH_2-NH-(CH_2)_3-$$

$$-(CH_2)_3-O-CH_2-CH(OH)-CH_2-O-CO-CH_2-CH_2-NH(CH_2)_3-$$

$$-(CH_2)_3-O-CH_2-CH(CH_2-OH)-O-CO-CH_2-CH_2-NH(CH_2)_3-$$

$$-(CH_2)_3-O-CH_2-CH(CH_2-O-CO-CH_2-CH_2-NH(CH_2)_3-)-O-CO-CH_2-CH_2-NH(CH_2)_3-$$

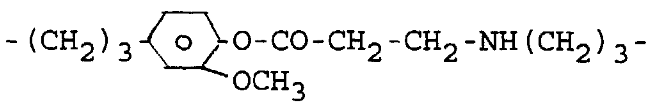

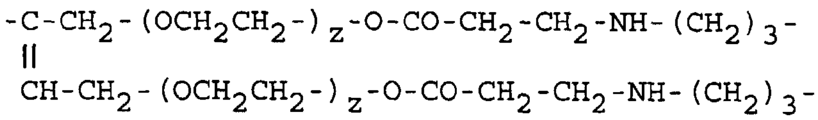

$-(CH_2)_3-O-CO-CH_2-CH_2-NH-CH(CH_3)-CH_2-$

$-(CH_2)_3-NH-CO-CH_2-CH_2-NH-CH(CH_3)-CH_2-$

$-(CH_2)_3-NH-CH_2-CH_2-NH-CO-CH_2-CH_2-NH-CH(CH_3)-CH_2-$

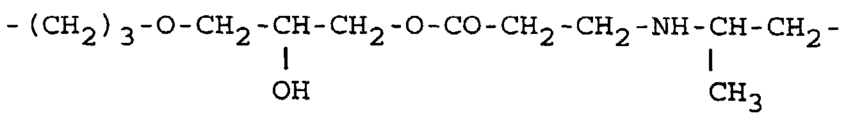

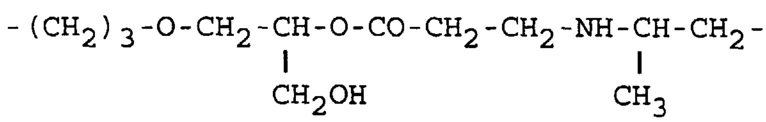

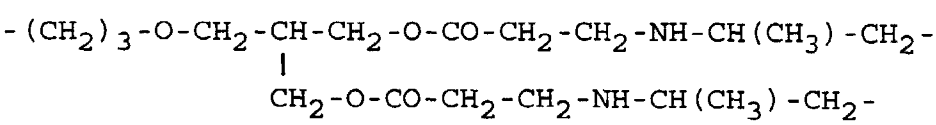

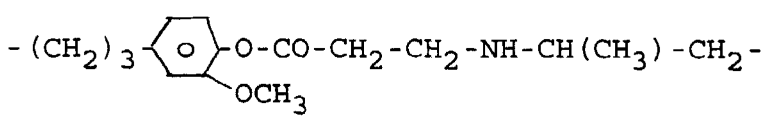

$-CH=CH-CH_2(-OCH_2CH_2-)_zO-CO-CH_2CH_2-NH-(CH_2)_3-$

$-CH=CH-CH_2(-OCH_2CH_2-)_zO-CO-CH_2CH_2-NH-CH(CH_3)-CH_2-$

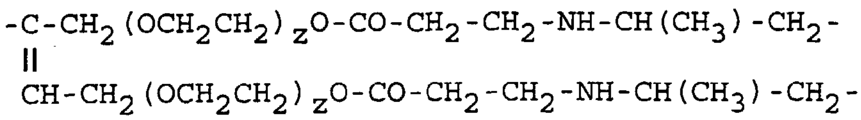

$$\begin{array}{l} \qquad\qquad\qquad\qquad\qquad\qquad\qquad\qquad\quad \oplus\ AN^- \\ -C-CH_2(OCH_2CH_2)_zO-CO-CH_2-CH_2-NH_2-CH(CH_3)-CH_2- \\ \| \qquad\qquad\qquad\qquad\qquad\qquad\qquad\qquad\quad \oplus\ AN^- \\ CH-CH_2(OCH_2CH_2)_zO-CO-CH_2-CH_2-NH_2-CH(CH_3)-CH_2- \end{array}$$

$$\begin{array}{l} \qquad\qquad\qquad\qquad\qquad\qquad\qquad\qquad\quad COCH_3 \\ \qquad\qquad\qquad\qquad\qquad\qquad\qquad\qquad\quad | \\ -C-CH_2(OCH_2CH_2)_zO-CO-CH_2-CH_2-N-CH(CH_3)-CH_2- \\ \| \\ CH-CH_2(OCH_2CH_2)_zO-CO-CH_2-CH_2-N-CH(CH_3)-CH_2- \\ \qquad\qquad\qquad\qquad\qquad\qquad\qquad\qquad\quad | \\ \qquad\qquad\qquad\qquad\qquad\qquad\qquad\qquad\quad COCH_3 \end{array}$$

wobei z gleich 0 oder eine ganze Zahl von 1 bis 10 ist, $AN^-$ ein Anion, wie z.B. $Cl^-$, $CH_3COO^-$ oder $HSO_4^-$ ist und die Reste jeweils so dargestellt sind, daß die linke Bindung der Übergang zum Si-Atom ist.

Bevorzugt handelt es sich bei Rest $R^2$ um

$$\begin{array}{l} -C-CH_2-(OCH_2CH_2-)_z-O-CO-CH_2-CH_2-NH-(CH_2)_3- \\ \| \\ CH-CH_2-(OCH_2CH_2-)_z-O-CO-CH_2-CH_2-NH-(CH_2)_3- \end{array}$$

$$-CH{=}CH-CH_2(-OCH_2CH_2-)_zO-CO-CH_2CH_2-NH-(CH_2)_3-$$

$$-CH{=}CH-CH_2(-OCH_2CH_2-)_zO-CO-CH_2CH_2-NH-CH(CH_3)-CH_2-$$

und

$$\begin{array}{l} -C-CH_2(OCH_2CH_2)_zO-CO-CH_2-CH_2-NH-CH(CH_3)-CH_2- \\ \| \\ CH-CH_2(OCH_2CH_2)_zO-CO-CH_2-CH_2-NH-CH(CH_3)-CH_2- \end{array}$$

mit z gleich der oben angegebenen Bedeutung, wobei die Reste jeweils so dargestellt sind, daß die linke Bindung der Übergang zum Si-Atom ist.

Beispiele für Reste $R^3$ sind die für Rest R angegebenen Beispiele für Kohlenwasserstoffreste mit 1 bis 20 Kohlenstoffatomen sowie $-CO-CH_3$, $-CO-CH_2-CH_3$ und $-CO-(CH_2)_3-CH_3$.

Bevorzugt ist der Rest $R^3$ ein Wasserstoffatom, eine Methyl-, Butyl- oder Phenylgruppe.

Beispiele für X gleich Reste der Formel (II) sind

$$\begin{array}{l} HC-CH_2-(OCH_2CH_2)_zO-CO-CH_2-CH_2-NH(CH_2)_3-[OCH_2CH_2]_{9-15}OCH_3 \\ \| \\ -C-CH_2-(OCH_2CH_2)_zO-CO-CH_2-CH_2-NH(CH_2)_3-[OCH_2CH_2]_{9-15}OCH_3 \end{array}$$

$HC-CH_2-(OCH_2CH_2)_zO-CO-CH_2-CH_2-NH-CH(CH_3)CH_2-[OCH_2CH_2]_{9-13}OCH_3$
$\|$
$-C-CH_2-(OCH_2CH_2)_zO-CO-CH_2-CH_2-NH-CH(CH_3)CH_2-[OCH_2CH_2]_{9-13}OCH_3$

$HC-CH_2-(OCH_2CH_2)_zO-CO-CH_2-CH_2-NH-CH(CH_3)CH_2-[OCH_2CH(CH_3)]_9OCH_3$
$\|$
$-C-CH_2-(OCH_2CH_2)_zO-CO-CH_2-CH_2-NH-CH(CH_3)CH_2-[OCH_2CH(CH_3)]_9OCH_3$

und

$HC-CH_2-(OCH_2CH_2)_zO-CO-CH_2-CH_2-NH(CH_2)_2-[OCH_2CH_2]_{100-200}OCH_3$
$\|$
$-C-CH_2-(OCH_2CH_2)_zO-CO-CH_2-CH_2-NH(CH_2)_2-[OCH_2CH_2]_{100-200}OCH_3$

mit z gleich der obengenannten Bedeutung.

Bevorzugt handelt es sich bei den Resten der Formel (II) um

$HC-CH_2-(OCH_2CH_2)_zO-CO-CH_2-CH_2-NH(CH_2)_3-[OCH_2CH_2]_{9-15}OCH_3$
$\|$
$-C-CH_2-(OCH_2CH_2)_zO-CO-CH_2-CH_2-NH(CH_2)_3-[OCH_2CH_2]_{9-15}OCH_3$

und

$HC-CH_2-(OCH_2CH_2)_zO-CO-CH_2-CH_2-NH-CH(CH_3)CH_2-[OCH_2CH_2]_{9-13}OCH_3$
$\|$
$-C-CH_2-(OCH_2CH_2)_zO-CO-CH_2-CH_2-NH-CH(CH_3)CH_2-[OCH_2CH_2]_{9-13}OCH_3$

mit z gleich der obengenannten Bedeutung.

Bevorzugt liegt der Wert für die Summe e+f+g zwischen 2 und 50, besonders bevorzugt zwischen 4 und 30.

Bevorzugt handelt es sich bei X um den Rest $-OR^1$ mit $R^1$ gleich der obengenannten Bedeutung, wobei $-OCH_3$ und $-OC_2H_5$ besonders bevorzugt sind.

Beispiele für Rest $R^4$ sind Reste der Formeln $-(CH_2)_3-$,

$$-(CH_2)_3-O-CH_2-CH(OH)-CH_2-,$$

$-(CH_2)_3-O-CH-CH_2-$
$\quad\quad\quad\quad\quad |$
$\quad\quad\quad\quad CH_2-OH$

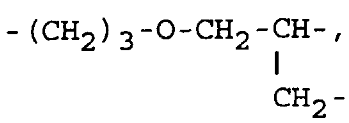 , 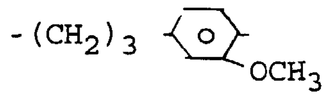

und

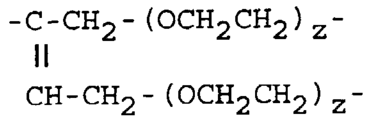

mit z gleich der obengenannten Bedeutung, wobei

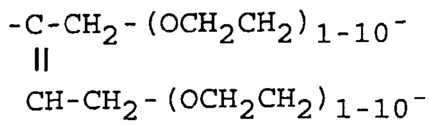

besonders bevorzugt sind und die Reste jeweils so dargestellt sind, daß die linke Bindung der Übergang zum Si-Atom ist.

Bevorzugt handelt es sich bei dem Rest A um

$-(CH_2)_3-O-CO-CH=CH_2$, $-(CH_2)_3-NH-CO-CH=CH_2$,

$-(CH_2)_3-O-CH_2-CH(OH)-CH_2-O-CO-CH=CH_2$,

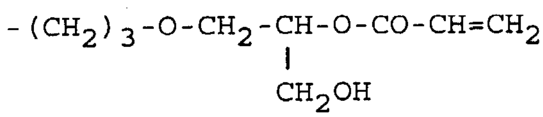

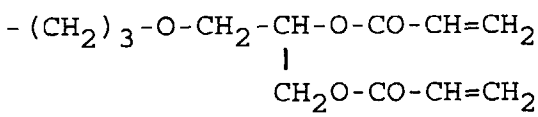

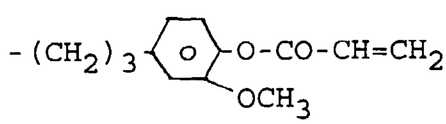

und

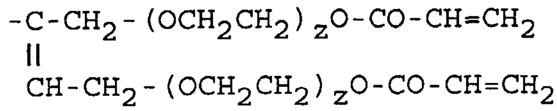

mit z gleich der obengenannten Bedeutung, wobei

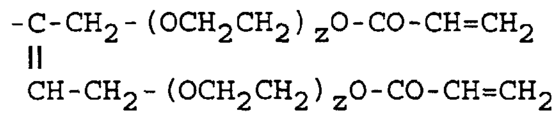

mit z = 1 bis 10 besonders bevorzugt sind.

Beispiele für Reste $R^9$ sind die für $R^4$ gleich dreiwertige Reste angegebenen Beispiele.

Beispiele für Reste $R^{10}$ sind

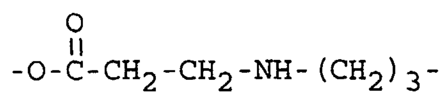

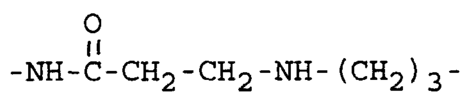

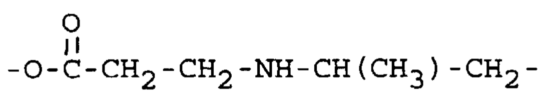

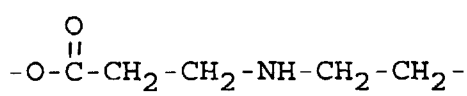

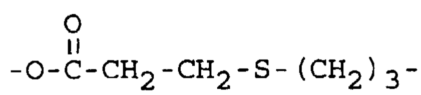

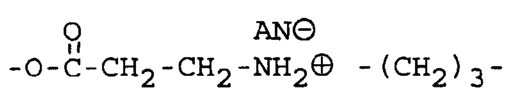

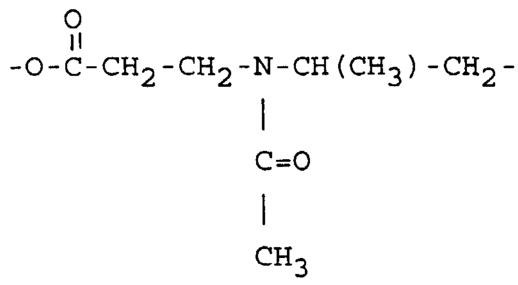

Beispiel für Reste A\` sind

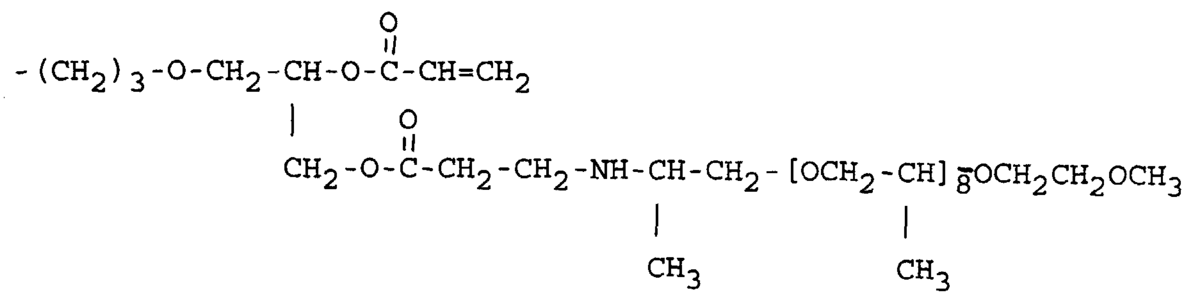

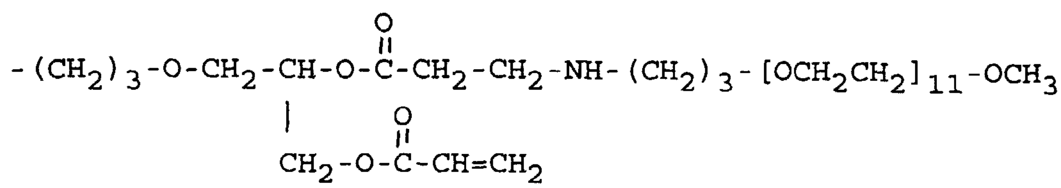

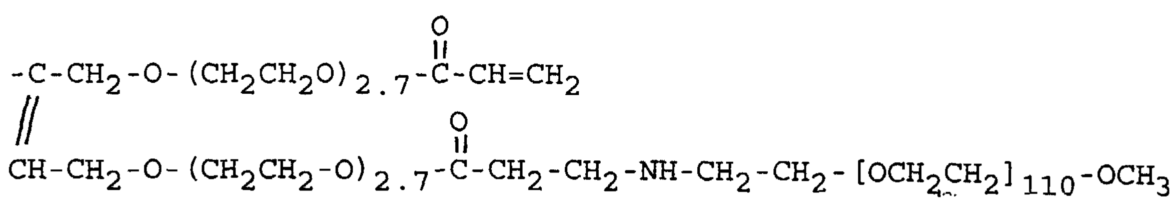

Bevorzugt handelt es sich bei den erfindungsgemäßen Organosiliciumverbindungen um solche der Formel

$$A`_vX_iA_hR_{3-h-i-v}SiO(SiX_iR_{2-i}O)_o$$

$$(SiA`_vR_{2-h-v}A_hO)_mSiA`_vX_iA_hR_{3-h-i-v} \qquad (IV),$$

wobei X, A, A\` und R die oben dafür angegebene Bedeutung haben, h gleich oder verschieden sein kann und 0, 1 oder 2 ist, i gleich oder verschieden sein kann und 0, 1 oder 2 ist, v gleich oder verschieden sein kann und 0, 1 oder 2 ist mit $h+i+v \leq 3$ in den endständigen Einheiten und $h+v \leq 2$ in den kettenständigen Einheiten, m und o jeweils 0 oder eine ganze Zahl von 1 bis 1000 ist, mit der Maßgabe, daß mindestens ein Rest der Formel (II) und mindestens ein Rest A oder mindestens ein Rest A\` je Molekül enthalten sind und die o Einheiten $(SiX_iR_{2-i}O)$ und die m Einheiten $(SiA`_vR_{2-h-v}A_hO)$ beliebig im Molekül verteilt sein können.

Bevorzugt weisen die erfindungsgemäßen Organosiliciumverbindungen einen Polyoxyalkylengehalt von 2 bis 50 Gewichtsprozent, besonders bevorzugt 5 bis 40 Gewichtsprozent, auf.

Bevorzugt weisen die erfindungsgemäßen Organosiliciumverbindungen einen Gehalt an (Meth)acrylatgruppen von 0,001 bis 0,2 Gewichtsprozent, besonders bevorzugt 0,01 bis 0,1 Gewichtsprozent, auf.

Die erfindungsgemäßen (Meth)acrylatgruppen und Oxyalkylengruppen aufweisenden Organosiliciumverbindungen können - falls erwünscht - weiterhin mit acylierenden Materialien, wie Essigsäureanhydrid, Acetylchlorid oder Isocyanaten umgesetzt werden, um überschüssige Amingruppen für weitere Michael-Additionen zu neutralisieren.

Gegenstand der Erfindung ist weiterhin ein Verfahren zur Herstellung von (Meth)acrylatgruppen und Oxyalkylengruppen aufweisenden Organosiliciumverbindungen, dadurch gekennzeichnet, daß Organosiliciumverbindungen enthaltend Einheiten der Formel

$$A_dR_bSi(OR^1)_kO_{(4-d-b-k)/2} \quad (V),$$

wobei R, $R^1$, A und b die oben dafür angegebene Bedeutung haben, d 0, 1 oder 2 ist und k 0, 1, 2 oder 3 ist, mit der Maßgabe, daß die Summe d+b+k≤4 ist und pro Molekül mindestens zwei (Meth)acrylatgruppen anwesend sind, d.h. mindestens zwei Reste A der Formel (III), falls $R^4$ ein zweiwertiger Rest ist, oder mindestens ein Rest A der Formel (III), falls $R^4$ ein dreiwertiger Rest ist,
mit Polyoxyalkylenen, ausgewählt aus monoaminierten Polyoxyalkylenen der Formel

$$HNR^6R^7\text{-[-OCH(CH}_3\text{)CH}_2]_e\ [CH_2CH_2O]_f\ [(CH_2)_4O]_g\ R^3 \quad (VI)$$

und/oder solchen der Formel

$$HSR^7\text{-[-OCH(CH}_3\text{)CH}_2]_e\ [CH_2CH_2O]_f\ [(CH_2)_4O]_g\ R^3 \quad (VI`),$$

wobei $R^3$, e, f und g die oben dafür angegebene Bedeutung haben, $R^6$ ein Wasserstoffatom oder einen einwertigen Kohlenwasserstoffrest mit 1 bis 8 Kohlenstoffatomen bedeutet, wobei ein Wasserstoffatom bevorzugt ist, und $R^7$ einen zweiwertigen Kohlenwasserstoffrest mit 1 bis 12 Kohlenstoffatomen bedeutet,
umgesetzt werden.

Bei den erfindungsgemäß eingesetzten Organosiliciumverbindungen kann es sich sowohl um Silane handeln, d.h. Verbindungen der Formel (V) mit d+b+k=4, als auch um Siloxane, d.h. Verbindungen enthaltend Einheiten der Formel (V) mit d+b+k≤3. Vorzugsweise handelt es sich bei den erfindungsgemäß eingesetzten Organosiliciumverbindungen um Organopolysiloxane, insbesondere um solche, die aus Einheiten der Formel (V) bestehen.

Falls es sich bei den erfindungsgemäß eingesetzten Organosiliciumverbindungen um Organopolysiloxane handelt, liegt der durchschnittliche Wert für d bevorzugt von 0,001 bis 1,0, besonders bevorzugt von 0,01 bis 0,5, der durchschnittliche Wert für b bevorzugt von 0 bis 3,0, besonders bevorzugt von 0,2 bis 2,5, und der durchschnittliche Wert für k bevorzugt von 0,001 bis 3,0, besonders bevorzugt von 0,01 bis 2.

Beispiele für Reste $R^7$ sind lineare oder verzweigte Alkylenreste, wie etwa der 1,2-Ethylen-, 1,3- Propylen-, 1,2-Propylen-, 1,3-(2-Methylpropylen)- und Dimethylmethylenrest.

Bevorzugt handelt es sich bei $R^7$ um den 1,3-Propylen- und 1,2-Propylenrest.

Beispiele für Kohlenwasserstoffreste $R^6$ sind die für R angegebenen Beispiele für Kohlenwasserstoffreste mit 1 bis 8 Kohlenstoffatomen, wobei der Methyl-, Butyl- und Cyclohexylrest bevorzugt sind und der Methylrest besonders bevorzugt ist.

Vorzugsweise handelt es sich bei den im erfindungsgemäßen Verfahren eingesetzten Organosiliciumverbindungen um Organopolysiloxanöle mit seiten- und/oder endständigen Acrylat- oder Diacrylatgruppen, besonders bevorzugt um solche mit Doppelbindungsequivalenten von 200 g/mol C=C bis 100 000 g/mol C=C.

Bevorzugt handelt es sich bei den erfindungsgemäß eingesetzten monoaminierten Polyoxyalkylenen der Formel (VI) um

$$H_2NCH_2CH_2(OCH_2CH_2)_{10\text{-}20}OH$$

$$H_2N(CH_2)_3(OCH_2\text{-}CH(CH_3))_{6\text{-}9}OH$$

$$H_2NCH_2CH_2(OCH_2CH_2)_{100\text{-}200}OCH_3$$

$H_2N(CH_2)_3(OCH_2\text{-}CH(CH_3))_{11\text{-}15}OCH_3$

$H_2NCH_2CH_2(OCH_2CH_2)_{50\text{-}70}O\text{-}CO\text{-}CH_3$

$H_2N(CH_2)_3(OCH_2\text{-}CH(CH_3))_{20\text{-}25}O\text{-}CO\text{-}CH_3$

$H_2N(CH_2)_3(OCH_2CH_2)_{4\text{-}8}OH$

$H_2N(CH_2)_3(OCH_2CH_2)_{20\text{-}30}OCH_3$

$H_2N\text{-}CH(CH_3)\text{-}CH_2(OCH_2\text{-}CH(CH_3))_{7\text{-}9}OH$

$H_2N(CH_2)_3(OCH_2CH_2)_{1\text{-}5}O\text{-}CO\text{-}CH_3$

$H_2N\text{-}CH(CH_3)\text{-}CH_2(OCH_2CH(CH_3))_{8\text{-}10}OCH_2CH_2OCH_3$

$H_2N\text{-}CH(CH_3)CH_2(OCH_2CH_2)_{80\text{-}90}OH$

$H_2N\text{-}CH(CH_3)CH_2(OCH_2CH(CH_3))_{15\text{-}20}O\text{-}CO\text{-}CH_3$

$H_2N\text{-}CH(CH_3)CH_2(OCH_2CH_2)_{9\text{-}13}OCH_3$

$H_2N\text{-}CH_2CH_2(O(CH_2)_4)_{3\text{-}7}OH$

$H_2N\text{-}CH(CH_3)CH_2(OCH_2CH_2)_{40\text{-}50}O\text{-}CO\text{-}CH_3$

$H_2N\text{-}CH_2CH_2(O(CH_2)_4)_{3\text{-}7}OCH_3$

$H_2N\text{-}CH_2CH_2(OCH_2CH(CH_3))_{8\text{-}12}OH$

$H_2N\text{-}CH_2CH_2(O(CH_2)_4)_{9\text{-}12}O\text{-}CO\text{-}CH_3$

$H_2N\text{-}CH_2\text{-}CH_2(OCH_2CH(CH_3))_{16\text{-}20}OCH_3$

$H_2N\text{-}CH(CH_3)CH_2(O(CH_2)_4)_{5\text{-}8}OH$

$H_2N\text{-}CH_2\text{-}CH_2(OCH_2CH(CH_3))_{3\text{-}7}O\text{-}CO\text{-}CH_3$

$$H_2N\text{-}CH(CH_3)CH_2(O(CH_2)_4)_{25\text{-}30}OCH_3$$

$$H_2N\text{-}CH_2\text{-}CH(CH_3)\text{-}(OCH_2CH_2)_{8\text{-}12}OCH_3$$

$$H_2N\text{-}CH_2\text{-}CH(CH_3)\text{-}(OCH_2CH(CH_3))_{4\text{-}6}OCH_3$$

und

$$H_2N\text{-}CH_2\text{-}CH(CH_3)\text{-}(O(CH_2)_4)_{5\text{-}8}O\text{-}CO\text{-}CH_3 .$$

Besonders bevorzugt handelt es sich bei den erfindungsgemäß eingesetzten monoaminierten Polyoxyalkylenen der Formel (VI) um

$$H_2N\text{-}CH_2\text{-}CH_2(OCH_2CH_2)_{100\text{-}20}OCH_3$$

$$H_2N\text{-}CH(CH_3)\text{-}CH_2(OCH_2CH_2)_{9\text{-}13}OCH_3$$

$$H_2N\text{-}CH(CH_3)\text{-}CH_2\ (OCH_2CH(CH_3))_{8\text{-}10}OCH_2CH_2OCH_3$$

und

$$H_2N\text{-}CH_2CH_2(O(CH_2)_4)_{15\text{-}17}OH .$$

Bevorzugt handelt es sich bei den erfindungsgemäß eingesetzten Polyoxyalkylenen der Formel (VI`) um

$$HS\text{-}CH_2\text{-}CH_2\text{-}[OCH_2\text{-}CH_2\text{-}]_{110}\text{-}0CH_3.$$

Bei dem erfindungsgemäßen Verfahren werden als Polyoxyalkylene bevorzugt solche der Formel (VI) eingesetzt.

Die im erfindungsgemäßen Verfahren eingesetzten Organosiliciumverbindungen enthaltend Einheiten der Formel (V) sowie die monoaminierten Polyoxyalkylene der Formel (VI) bzw. die Polyoxyalkylene der Formel (VI`) sind handelsübliche Produkte bzw. nach in der Chemie bekannten Methoden herstellbar.

Vorzugsweise werden bei dem erfindungsgemäßen Verfahren pro Mol (Meth)acrylatrest in der eingesetzten Organosiliciumverbindung enthaltend Einheiten der Formel (V) 0,001 bis 0,999 Mol Polyoxyalkylen der Formel (VI) und/oder (VI`), besonders bevorzugt 0,01 bis 0,9 Mol, insbesondere 0,1 bis 0,9 Mol, verwendet.

Bei den erfindungsgemäßen Verfahren können alle bekannten Verbindungen, die Michael-Reaktion ähnliche Reaktionen katalysieren, wie beispielsweise Eisessig, Zinn(IV)-chlorid, Natriummethylat, Phosphonium-, Ammonium- und Sulfoniumsalze sowie Alkaliamide, eingesetzt werden, was jedoch nicht bevorzugt ist.

Das erfindungsgemäße Verfahren kann in Substanz, Lösung oder Emulsion durchgeführt werden, wobei das Verfahren in Lösung oder Emulsion bevorzugt ist.

Falls das erfindungsgemäße Verfahren in Lösung durchgeführt wird, können organische Lösungsmittel, Wasser oder deren Mischungen mitverwendet werden, wobei der Zusatz von organischem Lösungsmittel bevorzugt ist.

Beispiele für gegebenenfalls eingesetzte organische Lösungsmittel sind Toluol, Xylol, Tetrahydrofuran, n-Butylacetat, Isopropanol und Dimethoxyethan. Falls Lösungsmittel eingesetzt werden, handelt es sich bevorzugt um Isopropanol und Toluol.

Falls Lösungsmittel eingesetzt werden, handelt es sich um Mengen von vorzugsweise 5 bis 50 Gewichtsprozent, bezogen auf das Gesamtgewicht der reaktiven Komponenten.

Falls Lösungsmittel mitverwendet werden, so werden diese nach der erfindungsgemäßen Umsetzung vorzugsweise auf bekannte Art und Weise, wie etwa durch Destillation, entfernt.

Falls das erfindungsgemäße Verfahren in Emulsion durchgeführt wird, werden die Polyoxyalkylenverbindungen der Formel (VI) und/oder (VI') in eine Teilmenge Wasser mit ggfs. ionischen oder nichtionischen Emulgatoren vorgelegt. Danach wird die Organosiliciumverbindung der Formel (V) unter Einwirkung von Scherkräften (z. B. Turrax-Rührer) emulgiert und addiert. Die Emulsion kann ggfs. noch mit Wasser verdünnt werden.

Das erfindungsgemäße Verfahren wird vorzugsweise beim Druck der umgebenden Atmosphäre, also zwischen 900 und 1100 hPa durchgeführt. Es kann aber auch bei höheren oder niedrigeren Drücken durchgeführt werden.

Ferner wird das erfindungsgemäße Verfahren vorzugsweise bei einer Temperatur von 25 bis 150°C, besonders bevorzugt 25 bis 120°C, insbesondere 25 bis 100°C, durchgeführt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Die nach dem erfindungsgemäßen Verfahren erhaltenen (Meth)acrylatgruppen und Polyoxyalkylengruppen aufweisenden Organopolysiloxane können mit Organopolysiloxanen (1), bevorzugt ausgewählt aus der Gruppe, bestehend aus linearen, endständigen Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten equilibriert werden, wodurch beispielsweise die Einstellung des gewünschten Molekulargewichts sowie die gezielte Verteilung der Polyoxyalkylengruppen im Molekül ermöglicht wird.

Vorzugsweise werden als lineare, endständige Triorganosiloxygruppen aufweisende Organopolysiloxane solche der Formel

$$R^8{}_3SiO(SiR^8{}_2O)_rSiR^8{}_3 \qquad (VIII),$$

als lineare, endständige hydroxylgruppen aufweisende Organopolysiloxane solche der Formel

$$HO\,(SiR^8{}_2O)_sH \qquad (IX),$$

als cyclische Organopolysiloxane solche der Formel

$$(R^8{}_2SiO)_t \qquad (X)$$

und als Mischpolymerisate solche als Einheiten der Formel

$$R^8{}_2SiO$$

und

$$R^8SiO_{3/2}$$

eingesetzt, wobei $R^8$ jeweils gleich oder verschieden sein kann und eine für R angegebene Bedeutung hat,

r 0 oder eine ganze Zahl von 1 bis 1500 ist,
s 0 oder eine ganze Zahl von 1 bis 1500 ist und
t eine ganze Zahl im Wert von 3 bis 12 ist.

Die Mengenverhältnisse der bei der gegebenenfalls durchgeführten Equilibrierung eingesetzten Organopolysiloxane (1) und erfindungsgemäß hergestellten Polyoxyalkylengruppen aufweisenden Organopolysiloxane werden lediglich durch den gewünschten Anteil (Meth)acrylatgruppen und der Polyoxyalkylengruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden saure oder basische Katalysatoren, welche die Equilibrierung fördern, eingesetzt, wobei saure Katalysatoren bevorzugt sind.

Beispiele für saure Katalysatoren sind Schwefelsäure, Phosphorsäure, Trifluormethansulfonsäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat, wobei als sauere Katalysatoren Phosphornitridchloride bevorzugt sind. Saure Katalysatoren werden vorzugsweise in Mengen von 5 bis 1000 Gewichts-ppm (=Teile je Million), insbesondere 50 bis 200 Gewichts-ppm, jeweils bezogen auf das Gesamtgewicht der eingesetzten Organosiliciumverbindungen, verwendet.

Beispiele für basische Katalysatoren sind Benzyltrimethylammoniumhydroxid, Tetramethylammoniumhydroxid, Alkalihydroxide, Erdalkalihydroxide in methanolischer Lösung, Phosphoniumhydroxide und Silanolate, wobei als basische Katalysatoren Alkalihydroxide bevorzugt sind. Basische Katalysatoren werden bevorzugt in Mengen von 50 bis 10 000 Gewichts-ppm (Teile je Million), insbesondere 500 bis 2000 Gewichts-ppm, jeweils bezogen auf das Gesamtgewicht der eingesetzten Organosiliciumverbindungen, verwendet.

Die gegebenenfalls durchgeführte Equilibrierung wird vorzugsweise bei 80 bis 150°C und beim Druck der umgebenden Atmosphäre, also etwa zwischen 900 und 1100 hPa, durchgeführt. Falls erwünscht, können aber auch höhere oder niedrigere Drücke angewendet werden.

Das Equilibrieren wird vorzugsweise in 5 bis 20 Gewichtsprozent, bezogen auf das Gesamtgewicht der jeweils eingesetzten Organosiliciumverbindungen, in mit Wasser nicht mischbarem Lösungsmittel, wie Toluol, durchgeführt.

Vor dem Aufarbeiten des bei dem Equilibrieren erhaltenen Gemisches kann der Katalysator unwirksam gemacht werden.

Die erfindungsgemäßen Verfahrensschritte können absatzweise, halbkontinuierlich oder vollkontinuierlich durchgeführt werden.

Das erfindungsgemäße Verfahren hat den Vorteil, daß es sehr einfach in der Durchführung ist und ein sehr hoher Umsatz erzielt wird.

Des weiteren hat das erfindungsgemäße Verfahren den Vorteil, daß durch Modifikation der Polymerstrukturen und -kettenlängen bzw. der Silanstrukturen die Polarität der erfindungsgemäßen Copolymeren auf einfache Art und ganz gezielt eingestellt werden kann.

Ferner hat das erfindungsgemäße Verfahren den Vorteil, daß keine Übergangs- oder Schwermetalle verwendet werden müssen und die Temperaturbelastung gering ist.

Die erfindungsgemäßen (Meth)acrylatgruppen und Polyoxyalkylengruppen aufweisenden Organosiliciumverbindungen haben den Vorteil, daß sie eine gute Verträglichkeit mit gängigen Acrylatlacken aufweisen.

Weiterhin haben die erfindungsgemäßen Organosiliciumverbindungen den Vorteil, daß sie durch die verbleibenden Acrylatgruppen gut in Lacke kovalent eingebaut werden können und den Lakken so eine weiche, hydrophobe Oberfläche verleihen.

Ferner haben die erfindungsgemäßen Organosiliciumverbindungen den Vorteil, daß die verbleibenden (Meth) acrylatgruppen radikalisch oder über eine Hydrosilylierung vernetzt werden können.

Die erfindungsgemäßen bzw. erfindungsgemäß hergestellten (Meth)acrylatgruppen und Polyoxyalkylengruppen aufweisenden Organosilicium-verbindungen können für alle Zwecke eingesetzt werden, für die auch bisher Acrylatgruppen aufweisende Organosiliciumverbindungen eingesetzt wurden, wie beispielsweise zur Polymermodifizierung, zur Beschichtung von Papieren, Folien und textilen Flächengebilden, zur Behandlung von Geweben, Maschenwaren, Vliesen oder Ledern sowie in der Kosmetik-, Pflegemittel-, Polish-, Lack- und Druckfarbenindustrie.

In den nachfolgenden Beispielen beziehen sich alle Angaben von Teilen und Prozentsätzen, soweit nichts anderes angegeben ist, auf das Gewicht. Sofern nichts anderes angegeben, werden die nachfolgenden Beispiele bei einem Druck der umgebenden Atmosphäre, also etwa bei 1000 hPa, und bei Raumtemperatur, also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen, sofern nichts anderes angegeben ist.

**Beispiel 1**

50 g (0,0384 mol C=C) eines Diacrylatgruppen-endterminierten Polydimethylsiloxanes der mittleren Kettenlänge 56 mit einem Doppelbindungsequivalent von ca. 1 300 g/mol und einer Viskosität von 310 $mm^2/s$ der Formel

$$Q\text{-}SiMe_2O(SiMe_2O)_{54}\text{-}SiMe_2\text{-}Q$$

$$Q = H_2C{=}CH{-}C(O)O{-}(CH_2CH_2O)_{2.7}{-}CH_2{-}CH$$
$$''$$
$$H_2C{=}CH{-}C(O)O{-}(CH_2CH_2O)_{2.7}{-}CH_2{-}C{-}$$

Me = Methylrest
werden mit 6,04 g (9,6 mol $\cdot 10^{-3}$ $NH_2$) eines monoaminierten O'Methylpolyglykols der mittleren Kettenlänge 11 der Formel

$$H_2N{-}(CH_2)_3{-}[OCH_2CH_2]_{11}{-}OCH_3$$

in 11,2 g (0,19 mol) 2-Propanol zwei Stunden bei 80°C gerührt.

Nach der Filtration wird die Reaktionsmischung im Hochvakuum (1 mbar) bei 80°C bis zur Gewichtskonstanz eingeengt. Man erhält 42,6 g (76% d.Th.) eines orange-braunen, klaren Öles der Viskosität 1 350 $mm^2/s$ (Copo 1).

**Beispiel 2**

Die in Beispiel 1 beschriebene Verfahrensweise wird wiederholt mit der Änderung, daß anstatt 6,04 g 18,12 g (0,0288 mol $NH_2$) des monoaminierten O'Methylpolyglykols eingesetzt werden. Man erhält 54,5 g (80% d.Th.) eines orange-braunen, klaren Öles der Viskosität 1 730 $mm^2/s$.

**Beispiel 3**

Die in Beispiel 1 beschriebene Verfahrensweise wird wiederholt mit der Abänderung, daß anstatt 6,04 g des monoaminierten O'Methylpolylykols 53,3 g ($9,6 \cdot 10^{-3}$ mol $NH_2$) O-(2-Aminoethyl)O'methylpolyethylenglykol der mittleren Kettenlänge 110 der Formel

$$H_2N{-}CH_2{-}CH_2(OCH_2CH_2)_{110}{-}OCH_3$$

und statt 11,2 g 54,2 g (0,9 mol) 2-Propanol eingesetzt werden. Man erhält 87,3 g (84,5 % d.Th.) eines orange-braunen, klaren Öles der Viskosität 25 000 $mm^2/s$.

**Beispiel 4**

Die in Beispiel 3 beschriebene Arbeitsweise wird wiederholt mit der Abänderung, daß anstatt 53,3 g 160,0 g (0,0288 mol $NH_2$) des O-(2-Aminoethyl)-O'methylpolyethylenglykol und statt 54,2 g 160,0 g (2,67 mol) 2-Propanol eingesetzt werden. Man erhält 204,2 g (97,2 % d.Th.) einer orangen, klaren Paste der Viskosität 47 000 $mm^2/s$ bei 40°C.

**Beispiel 5**

10 g Copo 1, dessen Herstellung in Beispiel 1 beschrieben ist, werden mit 0,2 g 2,2'-Azobisisobutyronitril versetzt und 3 Stunden bei 100°C temperiert. Man erhält einen vollständig vernetzten, bräunlichen Kautschuk.

**Beispiel 6**

10 g Copo 1, dessen Herstellung in Beispiel 1 beschrieben ist, werden mit 0,4 g ($3,9\ g \cdot 10^{-3}$mol) Essigsäureanhydrid eine Stunde bei 80°C gerührt. Nach der Filtration wird die Reaktionsmischung im Hochvakuum (1 mbar) bei 80°C bis zur Gewichtskonstanz eingeengt. Man erhält 8,9 g eines bräunlichen, klaren Öles der Viskosität 1 280 $mm^2/s$.

**Beispiel 7**

50 g (0,103 mol C=C) eines mit Diacrylatgruppen endterminierten Polydimethylsiloxanes der mittleren Kettenlänge 15 mit einem Doppelbindungsequivalent von ca. 500 g/mol und einer Viskosität von 105 $mm^2/s$ der Formel

$$Q\text{-}SiMe_2(OSiMe_2)_{13}OSiMe_2\text{-}Q$$

Q =

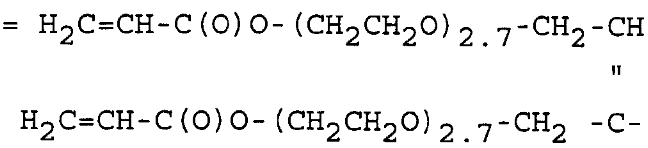

Me = Methylrest
werden mit 16,2 g (0,0258 mol $NH_2$) eines monoaminierten O'Methylpolyglykols der mittleren Kettenlänge 11 der Formel

$$H_2N\text{-}(CH_2)_3\text{-}[OCH_2CH_2]_{11}\text{-}OCH_3$$

in 13,0 g (0,22 mol) 2-Propanol zwei Stunden bei 80°C gerührt. Nach der Filtration wird die Reaktionsmischung im Hochvakuum (1 mbar) bei 80°C bis zur Gewichtskonstanz eingeengt. Man erhält 58,9 g (89% d.Th.) eines braunen, klaren Öles der Viskosität 740 $mm^2/s$.

**Beispiel 8**

Die in Beispiel 7 beschriebenen Arbeitsweise wird wiederholt mit der Abänderung, daß anstatt 16,2 g des monoaminierten O'Methylpolyglykols 15,5 g O-(L-Aminopropyl)-O' (2-methoxyethyl)-polypropylenglykol der mittleren Kettenlänge 8 der Formel

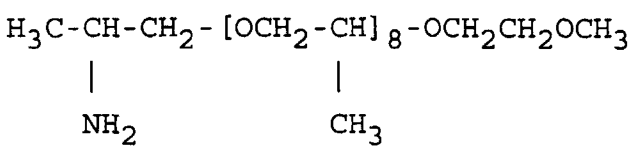

eingesetzt wird. Man erhält 62,4 g (95,3 % d.Th.) eines braunen, klaren Öles der Viskosität 670 $mm^2/s$.

## Patentansprüche

1. (Meth)acrylatgruppen und Oxyalkylengruppen aufweisende Organosiliciumverbindungen enthaltend Einheiten der Formel

$$A_aA`_uR_bSiX_cO_{(4-a-b-c-u)/2} \qquad (I),$$

wobei

R gleich oder verschieden sein kann und einen einwertigen, SiC-gebundenen, gegebenenfalls substituierten Kohlenwasserstoffrest mit 1 bis 22 Kohlenstoffatomen bedeutet,
X gleich oder verschieden ist und einen Rest der Formel $-OR^1$ mit $R^1$ gleich Wasserstoffatom oder ein Alkylrest mit 1 bis 8 Kohlenstoffatomen, der durch Ethersauerstoffatome substituiert sein kann, oder einen Rest der Formel

$$-R^2\{[CH(CH_3)CH_2O]_e\ [CH_2CH_2O]_f\ [(CH_2)_4O]_g\ R^3\}_{y-1} \qquad (II)$$

bedeutet, wobei $R^2$ einen SiC-gebundenen zweiwertigen oder dreiwertigen Kohlenwasserstoffrest mit 2 bis 60 Kohlenstoffatomen bedeutet, der durch ein oder mehrere Sauerstoffatome unterbrochen sein kann und der durch eine oder mehrere Gruppen der Formeln

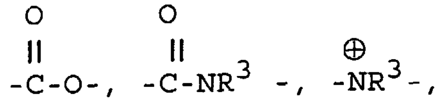

$-NHR^3-$, und -S- substituiert ist, y entsprechend der Wertigkeit von Rest $R^2$ 2 oder 3 ist, $R^3$ ein Wasserstoffatom oder einen gegebenenfalls mit einer Gruppe -C(O)- substituierten Kohlenwasserstoffrest mit 1 bis 20 Kohlenstoffatomen darstellt sowie e, f und g jeweils unabhängig voneinander 0 oder eine ganze Zahl von 1 bis 200 ist, mit der Maßgabe, daß die Summe $e + f + g \geq 1$ ist,

A ein Rest der Formel

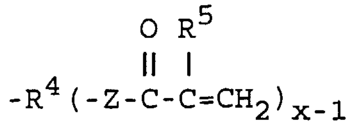

(III)

ist, wobei $R^4$ einen zweiwertigen oder dreiwertigen Kohlenwasserstoffrest mit 2 bis 60 Kohlenstoffatomen bedeutet, der durch ein oder mehrere Sauerstoffatome unterbrochen sein kann, x entsprechend der Wertigkeit von Rest $R^4$ 2 oder 3 ist, Z ein Rest -0- oder $-NR^3-$ ist mit $R^3$ gleich der obengenannten Bedeutung und $R^5$ ein Wasserstoffatom oder eine Methylgruppe bedeutet,

A\` ein Rest der Formel

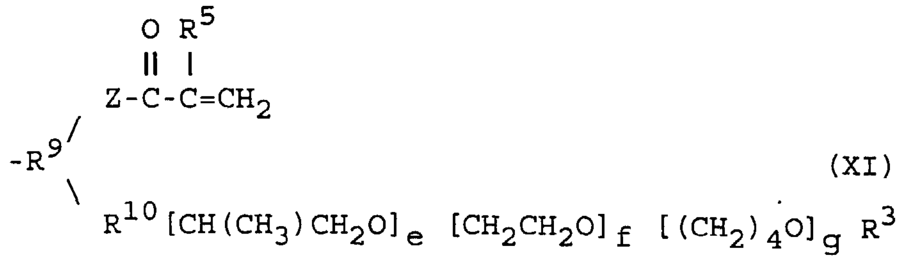

(XI)

ist, wobei $R^9$ einen dreiwertigen Kohlenwasserstoffrest mit 2 bis 60 Kohlenstoffatomen bedeutet, der durch ein oder mehrere Sauerstoffatome unterbrochen sein kann, $R^{10}$ einen zweiwertigen Kohlenwasserstoffrest mit 2 bis 20 Kohlenstoffatomen bedeutet, der durch ein oder mehrere Sauerstoffatome unterbrochen sein kann und der durch eine oder mehrere Gruppen der Formeln

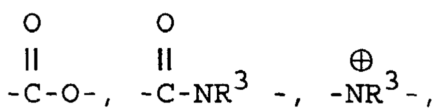

$-NHR^3-$, und -S- substituiert ist, sowie $R^5$, $R^3$, e, f und g eine der oben dafür angegebenen Bedeutungen haben,

a 0, 1 oder 2 ist,
u 0, 1 oder 2 ist
b 0, 1, 2 oder 3 ist und
c 0, 1, 2 oder 3 ist,

mit der Maßgabe, daß die Summe $a+b+c+u \leq 4$ ist und die Organosiliciumverbindung pro Molekül mindestens einen Rest A und mindestens einen Rest der Formel (II) oder mindestens einen Rest A\` aufweist.

**2.** Organosiliciumverbindungen gemäß Anspruch 1, dadurch gekennzeichnet, daß es sich um solche der Formel

$$A`_vX_iA_hR_{3-h-i-v}SiO(SiX_iR_{2-i}O)_o$$

$$(SiA`_vR_{2-h-v}A_hO)_mSiA`_vX_iA_hR_{3-h-i-v} \qquad (IV)$$

handelt, wobei X, A, A` und R die oben dafür angegebene Bedeutung haben, h gleich oder verschieden sein kann und 0, 1 oder 2 ist, i gleich oder verschieden sein kann und 0, 1 oder 2 ist, v gleich oder verschieden sein kann und 0, 1 oder 2 ist mit $h+i+v \leq 3$ in den endständigen Einheiten und $h+v \leq 2$ in den kettenständigen Einheiten, m und o jeweils 0 oder eine ganze Zahl von 1 bis 1000 ist, mit der Maßgabe, daß mindestens ein Rest der Formel (II) und mindestens ein Rest A oder mindestens ein Rest A` je Molekül enthalten sind und die o Einheiten $(SiX_iR_{2-i}O)$ und die m Einheiten $(SiA`_vR_{2-h-v}A_hO)$ beliebig im Molekül verteilt sein können.

**3.** Organosiliciumverbindungen gemäß Anspruch 1 oder 2, dadurch gekennzeichnet, daß es sich um solche mit einem Polyoxyalkylengehalt von 2 bis 50 Gewichtsprozent handelt.

**4.** Organosiliciumverbindungen gemäß einem oder mehreren der Ansprüche 1 bis 3, dadurch gekennzeichnet, daß es sich um solche mit einem Gehalt an (Meth)acrylatgruppen von 0,001 bis 0,2 Gewichtsprozent handelt.

**5.** Verfahren zur Herstellung von (Meth)acrylatgruppen und Oxyalkylengruppen aufweisenden Organosiliciumverbindungen, dadurch gekennzeichnet, daß Organosiliciumverbindungen enthaltend Einheiten der Formel

$$A_dR_bSi(OR^1)_kO_{(4-d-b-k)/2} \qquad (V),$$

wobei R, $R^1$, A und b die oben dafür angegebene Bedeutung haben, d 0, 1 oder 2 ist und k 0, 1, 2 oder 3 ist, mit der Maßgabe, daß die Summe $d+b+k \leq 4$ ist und pro Molekül mindestens zwei (Meth)acrylatgruppen anwesend sind, d.h. mindestens zwei Reste A der Formel (III), falls $R^4$ ein zweiwertiger Rest ist, oder mindestens ein Rest A der Formel (III), falls $R^4$ ein dreiwertiger Rest ist,
mit Polyoxyalkylenen, ausgewählt aus monoaminierten Polyoxyalkylenen der Formel

$$HNR^6R^7\text{-}[\text{-}OCH(CH_3)CH_2]_e\,[CH_2CH_2O]_f\,[(CH_2)_4O]_g\,R^3 \qquad (VI)$$

und/oder solchen der Formel

$$HSR^7\text{-}[\text{-}OCH(CH_3)CH_2]_e\,[CH_2CH_2O]_f\,[(CH_2)_4O]_g\,R^3 \qquad (VI`),$$

wobei $R^3$, e, f und g die oben dafür angegebene Bedeutung haben, $R^6$ ein Wasserstoffatom oder einen einwertigen Kohlenwasserstoffrest mit 1 bis 8 Kohlenstoffatomen bedeutet, wobei ein Wasserstoffatom bevorzugt ist, und $R^7$ einen zweiwertigen Kohlenwasserstoffrest mit 1 bis 12 Kohlenstoffatomen bedeutet, umgesetzt werden.

**6.** Verfahren nach Anspruch 5, dadurch gekennzeichnte, daß es sich bei den eingesetzten Organosiliciumverbindungen um Organopolysiloxanöle mit seiten- und/oder endständigen Acrylat- oder Diacrylatgruppen handelt.

**7.** Verfahren nach Anspruch 5 oder 6, dadurch gekennzeichnet, daß es sich bei den eingesetzten Polyoxyalkylenen um solche der Formel (VI) handelt.

**8.** Verfahren nach einem oder mehreren der Ansprüche 5 bis 7, dadurch gekennzeichnte, daß pro Mol (Meth)acrylatrest in der eingesetzten Organosiliciumverbindung enthaltend Einheiten der Formel (V) 0,001 bis 0,999 Mol Polyoxyalkylen der Formel (VI) und/oder (VI`) verwendet werden.

## Claims

1. Organosilicon compounds containing (meth)acrylate groups and oxyalkylene groups and comprising units of the formula

$$A_aA`_uR_bSiX_cO_{(4-a-b-c-u)/2} \qquad (I),$$

where

R can be identical or different and are each a monovalent, SiC-bonded, substituted or unsubstituted hydrocarbon radical having from 1 to 22 carbon atoms,
X are identical or different and are each a radical of the formula $-OR^1$ where $R^1$ is a hydrogen atom or an alkyl radical having from 1 to 8 carbon atoms in which ether oxygen atoms may be present, or a radical of the formula

$$-R^2\{[CH(CH_3)CH_2O]_e\ [CH_2CH_2O]_f\ [(CH_2)_4O]_g\ R^3\}_{y-1} \qquad (II),$$

where $R^2$ is an SiC-bonded divalent or trivalent hydrocarbon radical having from 2 to 60 carbon atoms which may be interrupted by one or more oxygen atoms and is substituted by one or more groups of the formulae

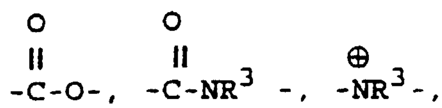

$-NHR^3-$, and -S-
y is, corresponding to the valence of radical $R^2$, 2 or 3, $R^3$ is a hydrogen atom or a hydrocarbon radical having from 1 to 20 carbon atoms which may be substituted by a -C(O)- group, and e, f and g are each, independently of one another, 0 or an integer from 1 to 200, with the proviso that the sum $e + f + g \geq 1$,

A is a radical of the formula

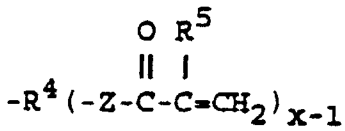

(III),

where $R^4$ is a divalent or trivalent hydrocarbon radical having from 2 to 60 carbon atoms which may be interrupted by one or more oxygen atoms, x is, corresponding to the valence of radical $R^4$, 2 or 3, Z is a radical -O- or $-NR^3-$ where $R^3$ is as defined above and $R^5$ is a hydrogen atom or a methyl group,

A` is a radical of the formula

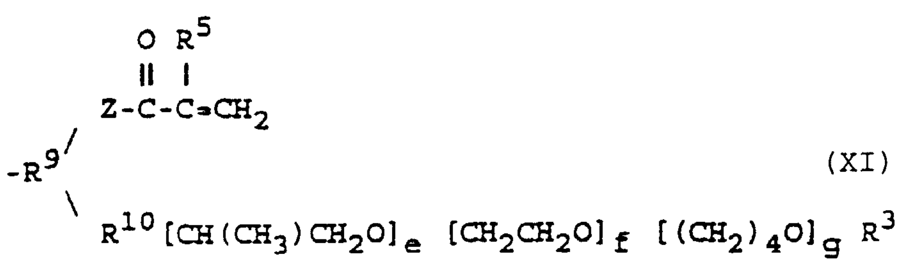

(XI),

where $R^9$ is a trivalent hydrocarbon radical having from 2 to 60 carbon atoms which may be interrupted by

one or more oxygen atoms, $R^{10}$ is a divalent hydrocarbon radical having from 2 to 20 carbon atoms which may be interrupted by one or more oxygen atoms and is substituted by one or more groups of the formulae

$$-\overset{O}{\overset{\|}{C}}-O-,\quad -\overset{O}{\overset{\|}{C}}-NR^3-,\quad -\overset{\oplus}{N}R^3-,$$

$-NHR^3-$, and -S- and $R^5$, $R^3$, e, f and g are as defined above,

a is 0, 1 or 2,
u is 0, 1 or 2,
b is 0, 1, 2 or 3 and
c is 0, 1, 2 or 3,

with the proviso that the sum $a+b+c+u \leq 4$ and the organosilicon compound contains at least one radical A and at least one radical of the formula (II) or at least one radical A` per molecule.

**2.** Organosilicon compounds according to Claim 1, characterized in that they have the formula

$$A`_vX_iA_hR_{3-h-i-v}SiO(SiX_iR_{2-i}O)_o$$

$$(SiA`_vR_{2-h-v}A_hO)_mSiA`_vX_iA_hR_{3-h-i-v} \quad (IV),$$

where X, A, A` and R are as defined above, h can be identical or different and in each case is 0, 1 or 2, i can be identical or different and in each case is 0, 1 or 2, v can be identical or different and in each case is 0, 1 or 2, where $h+i+v \leq 3$ in the terminal units and $h+v \leq 2$ in the units in the chain, m and o are each 0 or an integer from 1 to 1000, with the proviso that at least one radical of the formula (II) and at least one radical A or at least one radical A` are present per molecule and the o units $(SiX_iR_{2-i}O)$ and the m units $(SiA`_vR_{2-h-v}A_hO)$ can be distributed in any way in the molecule.

**3.** Organosilicon compounds according to Claim 1 or 2, characterized in that they have a polyoxyalkylene content of from 2 to 50 percent by weight.

**4.** Organosilicon compounds according to one or more of Claims 1 to 3, characterized in that they have a (meth) acrylate group content of from 0.001 to 0.2 percent by weight.

**5.** Process for preparing organosilicon compounds containing (meth)acrylate groups and oxyalkylene groups, characterized in that organosilicon compounds comprising units of the formula

$$A_dR_bSi(OR^1)_kO_{(4-d-b-k)/2} \quad (V),$$

where R, $R^1$, A and b are as defined above, d is 0, 1 or 2 and k is 0, 1, 2 or 3, with the proviso that the sum $d+b+k \leq 4$ and at least two (meth)acrylate groups are present per molecule, i.e. at least two radicals A of the formula (III) if $R^4$ is a divalent radical or at least one radical A of the formula (III) if $R^4$ is a trivalent radical,
are reacted with polyoxyalkylenes selected from among monoaminated polyoxyalkylenes of the formula

$$HNR^6R^7\text{-}[-OCH(CH_3)CH_2]_e\,[CH_2CH_2O]_f\,[(CH_2)_4O]_g\,R^3 \quad (VI)$$

and/or those of the formula

$$HSR^7\text{-}[-OCH(CH_3)CH_2]_e\,[CH_2CH_2O]_f\,[(CH_2)_4O]_g\,R^3 \quad (VI`),$$

where $R^3$, e, f and g are as defined above, $R^6$ is a hydrogen atom or a monovalent hydrocarbon radical having from 1 to 8 carbon atoms, with preference being given to a hydrogen atom, and $R^7$ is a divalent hydrocarbon radical having from 1 to 12 carbon atoms.

**6.** Process according to Claim 5, characterized in that the organosilicon compounds used are organopolysiloxanols containing lateral and/or terminal acrylate or diacrylate groups.

**7.** Process according to Claim 5 or 6, characterized in that the polyoxyalkylenes used are ones of the formula (VI).

**8.** Process according to one or more of Claims 5 to 7, characterized in that from 0.001 to 0.999 mol of polyoxyalkylene of the formula (VI) and/or (VI`) are used per mol of (meth)acrylate radicals in the organosilicon compound comprising units of the formula (V) which is used.

## Revendications

**1.** Composés organosiliciés renfermant des groupes (méth)acrylate et des groupes oxyalkylène et comprenant des motifs de formule

$$A_aA'_uR_bSiX_cO_{(4-a-b-c-u)/2} \qquad (I),$$

dans laquelle

R peut être identique ou différent et représente un radical hydrocarboné monovalent, lié à SiC, éventuellement substitué, ayant de 1 à 22 atomes de carbone,
X est identique ou différent et représente un radical de formule $-OR^1$, $R^1$ étant un atome d'hydrogène ou un radical alkyle ayant de 1 à 8 atomes de carbone, qui peut être substitué par des atomes d'oxygène d'éther, ou un radical de formule

$$-R_2\{[CH(CH_3)CH_2O]_e\ [CH_2CH_2O]_f\ [(CH_2)_4O]_g\ R^3]y-1 \qquad (II)$$

dans laquelle $R^2$ représente un radical hydrocarboné bivalent ou trivalent, lié à SiC, ayant de 2 à 60 atomes de carbone, qui peut être interrompu par un ou plusieurs atomes d'oxyène et qui est substitué par un ou plusieurs groupes de formules

$$-\overset{O}{\overset{\|}{C}}-O-,\quad -\overset{O}{\overset{\|}{C}}-NR^3-,\quad -\overset{\oplus}{N}R^3-,$$

$-NHR^3-$, et -S),
y vaut 2 ou 3 en fonction de la valence du radical $R^2$, $R^3$ représente un atome d'hydrogène ou un radical hydrocarboné ayant de 1 à 20 atomes de carbone, éventuellement substitué par un groupe -C(O)-, et e, f et g valent chacun, indépendamment les uns des autres 0 ou sont un entier de 1 à 200, à condition que la somme $e + f + g$ soit $\geq 1$,
A est un radical de formule

$$-R^4(-Z-\overset{O}{\overset{\|}{C}}-\overset{R^5}{\overset{|}{C}}=CH_2)_{x-1} \qquad (III)$$

dans laquelle $R^4$ représente un radical hydrocarboné bivalent ou trivalent ayant de 2 à 60 atomes de carbone,

qui peut être interrompu par un ou plusieurs atomes d'oxygène, x vaut 2 ou 3 en fonction de la valence du radical $R^4$, Z représente un radical -O- ou $-NR^3-$, $R^3$ ayant la signification susmentionnée, et $R^5$ représente un atome d'hydrogène ou un groupe méthyle,
A' est un radical de formule

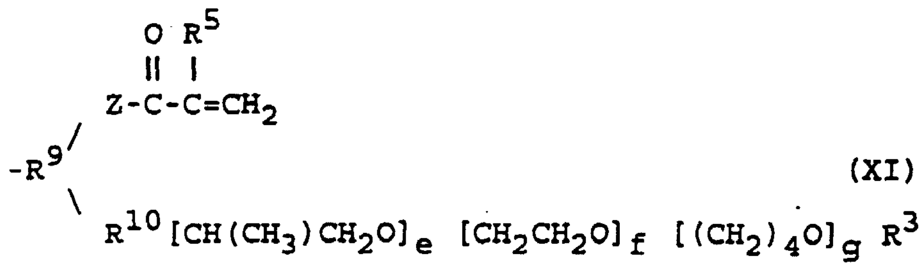

(XI)

dans laquelle $R^9$ représente un radical hydrocarboné trivalent ayant de 2 à 60 atomes de carbone, qui peut être interrompu par un ou plusieurs atomes d'oxygène, $R^{10}$ représente un radical hydrocarboné bivalent ayant de 2 à 20 atomes de carbone, qui peut être interrompu par un ou plusieurs atomes d'oxygène et qui peut être substitué par un ou plusieurs groupes de formules

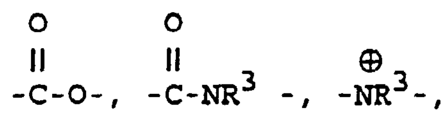

$-NHR^3-$, et -S-, et $R^5$, $R^3$, e, f et g ont les significations indiquées ci-dessus à cet effet,
a vaut 0, 1 ou 2,
u vaut 0, 1 ou 2,
b vaut 0, 1, 2 ou 3 et
c vaut 0, 1, 2 ou 3,

à condition que la somme a + b + c + u soit ≤ 4 et que le composé organosilicié renferme par molécule, au moins un radical A et au moins un radical de formule (II) ou au moins un radical A'.

**2.** Composés organosiliciés selon la revendication 1, caractérisés en ce que ce sont des composés de formule

$$A'_vX_iA_hR_{3-h-i-v}SiO(SiX_iR_{2-i}O)_o$$

$$(SiA'_vR_{2-h-v}A_hO)_mSiA'_vX_iA_hR_{3-h-i-v} \quad (IV)$$

dans laquelle X, A, A' et R ont la signification indiquée ci-dessus à cet effet, h peut être identique ou différent et vaut 0, 1 ou 2, i peut être identique ou différent et vaut 0, 1 ou 2, v peut être identique ou différent et vaut 0, 1 ou 2, h + i + v étant ≤ 3 dans les motifs terminaux et h + v ≤ 2 dans les motifs de la chaîne, m et o valent chacun 0 ou sont un entier de 1 à 1 000, à condition qu'au moins un radical de formule (II) et au moins un radical A ou au moins un radical A' soient présents par molécule et que les o motifs $(SiX_iR_{2-i}O)$ et que les m motifs $(SiA'_vR_{2-h-v}A_hO)$ puissent être répartis dans la molécule de manière aléatoire.

**3.** Composés organosiliciés selon la revendication 1 ou 2, caractérisés en ce que ce sont des composés ayant une teneur en polyoxyalkylène de 2 à 50 pour cent en poids.

**4.** Composés organosiliciés selon l'une ou plusieurs des revendications 1 à 3, caractérisés en ce que ce sont des composés ayant une teneur en groupes (méth)acrylate de 0,001 à 0,2 pour cent en poids.

**5.** Procédé de préparation de composés organosiliciés renfermant des groupes (méth)acrylate et des groupes oxyalkylène, caractérisé en ce que l'on fait réagir des composés organosiliciés renfermant des motifs de formule

$$A_dR_bSi(OR^1)_kO_{(4-d-b-k)/2} \quad (V),$$

dans laquelle R, $R^1$, A et b ont la signification indiquée ci-dessus à cet effet, d vaut 0, 1 ou 2 et k vaut 0, 1, 2 ou 3, à condition que la somme d + b + k soit ≤ 4 et qu'au moins deux groupes (méth)acrylate soient présents par molécule, c'est-à-dire au moins deux radicaux A de formule (III) si $R^4$ est un radical bivalent ou au moins un radical A de formule (III) si $R^4$ est un radical trivalent,
avec des polyoxyalkylènes choisis parmi des polyoxyalkylènes mono-aminés de formule

$$HNR^6R^7\text{-[-OCH(CH}_3\text{)CH}_2]_e\,[CH_2CH_2O]_f\,[(CH_2)_4O]_gR_3 \quad (VI)$$

et/ou ceux de formule

$$HSR^7\text{-[-OCH(CH}_3\text{)CH}_2]_e\,[CH_2CH_2O]_f\,[(CH_2)_4O]_gR^3 \quad (VI'),$$

dans lesquelles $R^3$, e, f et g ont la signification indiquée ci-dessus à cet effet, $R^6$ représente un atome d'hydrogène ou un radical hydrocarboné monovalent ayant de 1 à 8 atomes de carbone, un atome d'hydrogène étant préféré, et $R^7$ représente un radical hydrocarboné ayant de 1 à 12 atomes de carbone.

**6.** Procédé selon la revendication 5, caractérisé en ce que les composés organosiliciés utilisés sont des organopolysiloxanols ayant des groupes acrylate ou diacrylate latéraux et/ou terminaux.

**7.** Procédé selon la revendication 5 ou 6, caractérisé en ce que les polyoxyalkylènes utilisés sont ceux de formule (VI).

**8.** Procédé selon l'une ou plusieurs des revendications 5 à 7, caractérisé en ce que l'on utilise de 0,001 à 0,999 mol de polyoxyalkylène de formule (VI) et/ou (VI') par mol de radical (méth)acrylate dans le composé organosilicié utilisé renfermant des motifs de formule (V).